# EUROPEAN PATENT APPLICATION

(11) **EP 4 417 583 A1**
(43) Date of publication of application: **21.08.2024**
(21) Application number: 24153394.2
(22) Date of filing: 23.01.2024
(51) Int. Cl.: C03B 23/025, C03B 23/035

(54) **DYNAMIC MOLD FOR FORMING GLASS**

(30) Priority: 25.01.2023 US 202363481479 P
(71) Applicant: Apple Inc., Cupertino, CA 95014 (US)
(72) Inventor: KINGMAN, David E., Cupertino, 95014 (US); GOLKO, Albert J., Cupertino, 95014 (US); MEMERING, Dale N., Cupertino, 95014 (US); SKEEN, William J., Cupertino, 95014 (US)
(74) Representative: COPA Copenhagen Patents

(57) **Abstract**

A glass forming system includes a support that is configured to be installed in a glass bending furnace. The glass forming system further includes rods that are located adjacent to one another and spaced from each other to define a perimeter that encloses an open space. Each of the rods is coupled to the support. The glass forming system further includes actuators that are attached to the support. Each of the actuators is configured to move a corresponding one of the rods independently from the other rods. The glass forming system further includes a pad that is carried by the rods and that defines an engagement surface upon which a glass substrate is placed. A geometry of the engagement surface is reconfigurable based on movement of one or more of the rods.

## Description

### CROSS-REFERENCE TO RELATED APPLICATIONS

This application claims the benefit of United States Provisional Application No. 63/481,479, filed January 25, 2023. The content of the foregoing application is incorporated herein by reference in its entirety for all purposes.

### FIELD

The present disclosure relates generally to the field of glass forming.

### BACKGROUND

Panels of glass can be formed for implementation with devices. Such glass panels can be incorporated into portions of the body of a device, for instance to provide visibility into or out of the device.

### SUMMARY

One aspect of the disclosure is a glass forming system that includes a support that is configured to be installed in a glass bending furnace. The glass forming system further includes rods that are located adjacent to one another and spaced from each other to define a perimeter that encloses an open space. Each of the rods is coupled to the support. The glass forming system further includes actuators that are attached to the support. Each of the actuators is configured to move a corresponding one of the rods independently from the other rods. The glass forming system further includes a pad that is carried by the rods and that defines an engagement surface upon which a glass substrate is placed. A geometry of the engagement surface is reconfigurable based on movement of one or more of the rods.

Another aspect of the disclosure is another glass forming system that includes a support that is configured to be installed in a glass bending furnace. The glass forming system further includes rods that are arranged in an array upon which a glass substrate is placed. Each rod is coupled to the support. The glass forming system further includes actuators that are attached to the support. Each of the actuators is configured to move a corresponding one of the rods independently from other rods along a transverse direction relative to the support.

Still another aspect of the disclosure is another glass forming system that includes a first glass forming tool having a first rod that extends from an engagement end to an attachment end. The glass forming system further includes a second glass forming tool having a second rod that extends from an engagement end to an attachment end. The glass forming system further incudes a support that is installable in a glass bending furnace. The support includes a first receptacle that is configured to removably receive the first glass forming tool. The support further includes a second receptacle that is configured to removably receive the second glass forming tool. The support further includes a first actuator that is carried by the support and that is attachable to the attachment end of the first glass forming tool via the first receptacle. The first actuator is configured to move the first glass forming tool in a transverse direction relative to the support. The support further includes a second actuator that is carried by the support and that is attachable to the attachment end of the second glass forming tool via the second receptacle. The second actuator is configured to move the second glass forming tool in the transverse direction relative to the support.

### BRIEF DESCRIPTION OF THE DRAWINGS

FIG. 1A is a top view of an example glass forming system having rods that are adjustable relative to a support of the glass forming system.
FIG. 1B is a side view of the glass forming system illustrated in FIG. 1A.
FIG. 2A is a side view of the glass forming system illustrated in FIG. 1A installed in a glass bending furnace, with a glass substrate positioned on the glass forming system to undergo a forming process.
FIG. 2B is a side view of the glass forming system illustrated in FIG. 2A after a first portion of the forming process has been performed.
FIG. 2C is a side view of the glass forming system illustrated in FIG. 2A after a second portion of the forming process has been performed.
FIG. 3 is a side view of a portion of the glass forming system illustrated in FIG. 1A, including rods and a pad upon which a glass substrate is placed, with the rods fixedly attached to the pad.
FIG. 4 is a side view of a portion of the glass forming system illustrated in FIG. 1A, including rods and a pad upon which a glass substrate is placed, with the rods removably attached to the pad.
FIG. 5 is a side view of a portion of the glass forming system illustrated in FIG. 1A, in an alternative configuration with each rod having a pad fixedly attached thereto.
FIG. 6A is a top view of another example glass forming system having rods that are adjustable relative to a support of the glass forming system.
FIG. 6B is a side view of the glass forming system illustrated in FIG. 6A.
FIG. 7 is a block diagram of the glass forming system illustrated in FIG. 1A and a controller that is configured to control components of the glass forming system.

### DETAILED DESCRIPTION

The disclosure herein relates to glass forming systems and methods for using the disclosed glass forming systems to produce formed glass panels. The formed glass panels may be used with vehicles. Such panels can be incorporated into portions of the body of a vehicle. For example, formed glass panels can be incorporated into side portions, front portions, rear portions, roof portions, and the like, of a vehicle. Formed glass panels may be configured for deployment in vehicles such as automobiles, trucks, recreational vehicles, and the like, as well as aircraft and watercraft.

It is known that removing a glass substrate from a glass bending furnace between stages of a forming process typically requires re-aligning the glass substrate, for example relative to a forming tool, when it is placed back into the glass bending furnace. Furthermore, removing a glass substrate from a glass bending furnace between the stages of a forming process typically allows the glass to cool, which may increase the number of heating cycles and the amount of heating required to complete the forming process. The additional thermal cycles and heating may produce unwanted stresses in the glass, which may in turn increase the number and severity of defects introduced into the resulting formed glass panel.

The glass forming systems and example processes disclosed herein may be configured to perform a multi-stage forming process of a glass substrate, with the glass substrate remaining in the glass bending furnace throughout the forming process. Such a multi-stage forming process eliminates the need to remove the glass substrate from the glass bending furnace between stages of the forming process.

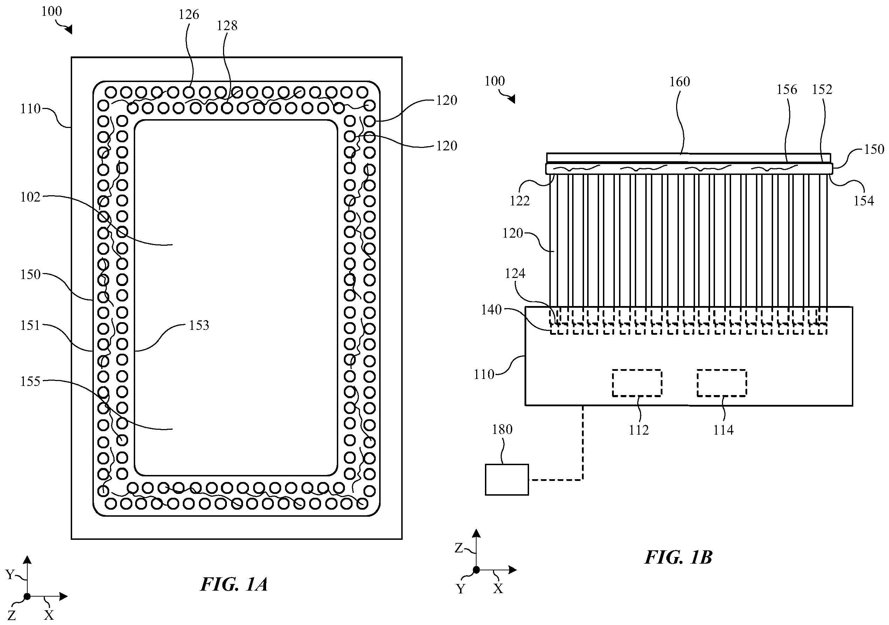

FIG. 1A is a top view of a glass forming system 100 in accordance with the instant disclosure. FIG. 1B is a side view of the glass forming system 100. The illustrated glass forming system 100 includes a support 110 that is configured to be installed in a glass bending furnace, rods 120, actuators 140, and a pad 150 that is carried by the rods 120.

The glass forming system 100 may include a multitude of rods 120. The rods 120 may be coupled to the support 110. As shown, each rod 120 extends between a first end 122 that is coupled to the pad 150 and a second end 124 that is coupled directly or indirectly to the support 110. In this regard, each of the rods 120 is coupled to the support 110. The illustrated support 110 extends laterally along an X direction, longitudinally along a Y direction, and transversely along a Z direction. The X direction may alternatively be referred to as the lateral direction, the Y direction may alternatively be referred to as the longitudinal direction, and the Z direction may alternatively be referred to as the transverse direction.

The rods 120 may be spaced from one another and arranged relative to one another based on a geometry of a glass substrate that is to be formed by the glass forming system 100. For the purposes of illustration, a glass substrate 160 having a rectangular geometry is depicted. As shown, the rods 120 may be located adjacent to one another and spaced from each other to define a perimeter that encloses an open space 102 located below the pad 150. Furthermore, the rods 120 may be oriented parallel to one another along the transverse direction. The illustrated perimeter of the rods 120 is aligned with the geometry of the glass substrate 160.

As shown, the rods 120 may be arranged in a first boundary 126 and a second boundary 128. The first boundary 126 has a first length, including the rods 120 that make up the first boundary 126 and the distances therebetween, and the second boundary 128 has a second length, including the rods 120 that make up the second boundary 128 and the distances therebetween, that is shorter than the first length. Stated differently, the second boundary 128 has a length that is shorter than that of the first boundary 126.

As shown, the first boundary 126 has a rectangular geometry with rounded corners. The first boundary 126 includes two sides that extend longitudinally, are spaced apart from each other, and are parallel to each other. The second boundary 128 has a rectangular geometry with rounded corners. The second boundary 128 includes two sides that extend longitudinally, are spaced apart from each other, and are parallel to each other. The second boundary 128 is nested within the first boundary 126.

The glass forming system 100 may be configured to enable individual movement of one or more of the rods 120 relative to each other. For example, the glass forming system 100 may be configured to enable individual movement of each of the rods 120 relative to each other. The rods 120 may be operably coupled to the actuators 140 to enable movement of the rods 120. To illustrate, as shown, the second end of each rod 120 is operably coupled to a corresponding one of the actuators 140. Each actuator 140 may be attached to the support 110 and configured to move a corresponding one of the rods 120 independently from other rods 120. In this regard, the glass forming system 100 may include a multitude of actuators 140. As shown, the glass forming system 100 may include a number of the actuators 140 that is equal to a number of the rods 120. Stated differently, each rod 120 may be coupled to a corresponding one of the actuators 140.

Each actuator 140 may be configured to translate a corresponding one of the rods 120. For example, in accordance with the illustrated glass forming system 100, each actuator 140 may be configured to translate a corresponding one of the rods 120 along a transverse direction relative to the support 110. More specifically, each actuator 140 may translate a corresponding one of the rods 120 along the Z direction relative to the support 110, such that the first end 122 of the rod 120 moves toward or away from the support 110.

The glass forming system 100 may be configured such that movement of the rods 120 is automated during a forming process of a glass substrate. For example, the actuators 140 may comprise linear actuators. Each linear actuator may be configured to translate a corresponding one of the rods 120 along a transverse direction relative to the support 110. To illustrate, as one example, the actuators 140 may be provided as ball screw actuators or lead screw actuators, each operably coupled to a corresponding one of the rods 120 and configured to translate the rod 120 along the Z direction relative to the support 110. As another example, the actuators 140 may be provided as electro-hydraulic actuators, with each electro-hydraulic actuator coupled to a corresponding one of the rods 120 and configured to translate the rod 120 along the Z direction relative to the support 110. Alternatively, the actuators 140 may be provided such that each actuator 140 is configured to manually translate a corresponding one of the rods 120 along a transverse direction relative to the support 110.

The pad 150 is carried by the rods 120. As shown, the pad 150 has an upper surface 152 and a lower surface 154 that is spaced from the upper surface 152. The pad 150 may have a geometry that at least partially matches the arrangement of the rods 120. For example, as shown the pad 150 may comprise a rectangular-shaped strip with outer edges 151 that extend outwardly beyond the first boundary 126 and inner edges 153 that extend inwardly beyond the second boundary 128, relative to the open space 102. The inner edges 153 may bound an opening 155 through the pad 150. As shown, the opening 155 may have a geometry that at least partially corresponds to that of the open space 102. In an alternative implementation, the pad 150 may have a rectangular shape with no opening over the open space 102, and may have outer edges that extend outwardly beyond the first boundary 126 relative to the open space 102.

The upper surface 152 of the pad 150 may define an engagement surface 156 upon which a glass substrate, such as the glass substrate 160 is placed. The pad 150 may be configured to be flexible, such that a geometry of the engagement surface 156 is reconfigurable based on movement of one or more of the rods 120 relative to the support 110. In the regard, the rods 120 and the pad 150 may function cooperatively as a dynamic, adjustable mold during a forming process of the glass substrate 160. The pad 150 is preferably made of a flexible, permeable material. For instance, the pad 150 may be made of woven steel fibers and may comprise a steel cloth.

The glass forming system 100 may be configured to apply heat, cooling, vacuum, or a combination thereof, broadly or in localized areas, to a glass substrate during a forming process. For example, the glass forming system 100 may include a heat source 112 that is configured to deliver heat to a glass substrate during a forming process. To illustrate, the heat source 112 may be connected to one or more of the rods 120, such as to all of the rods 120. Each rod 120 that is connected to the heat source 112 may be configured to deliver heat to the glass substrate 160 via the first end 122 of the rod 120, through the pad 150. In this regard, at least one of the rods 120 may be configured to apply heat to a glass substrate (e.g., the glass substrate 160) that is placed on the rods 120.

In an example of operation, heat may be applied to the glass substrate 160 by the glass forming system 100 to supplement heat that is applied to the glass substrate by a glass bending furnace in which the glass forming system 100 is installed. Alternatively, the glass forming system 100 may be controlled to apply heat to the glass substrate 160 while no heat is actively provided by the glass bending furnace, for instance during or between stages of a forming process of the glass substrate 160.

Heat may be applied to the glass substrate 160 by a glass bending furnace via one or more heating sources, such as radiative heating rods, located within the glass bending furnace. The one or more heating sources may be located above, below, around, or any combination thereof, relative to the glass substrate 160. To illustrate, a glass bending furnace may have heating sources located in ceiling and/or floor of a bending chamber of the glass bending furnace. The heating sources of the glass bending furnace may be configured to broadly heat the glass substrate 160, to apply localized heating to portions of the glass substrate 160 (e.g., by heating with select heating sources), or a combination thereof.

The glass forming system 100 may be controlled to apply localized heating to one or more portions of a glass substrate. For example, the glass forming system 100 may be controlled to apply heat via one or more of the rods 120 to corresponding portions of the glass substrate 160. To illustrate, during a forming process of the glass substrate 160 heat may be applied broadly to the glass substrate 160 (e.g., by the glass bending furnace emitting heat from all of its heating sources), in a localized manner to respective portions of the glass substrate 160 by the glass bending furnace emitting heat from select ones of its heating sources, in a localized manner to respective portions of the glass substrate 160 by the glass forming system 100 applying heat via one or more of the rods 120, or by a combination thereof.

The glass forming system 100 may include an air pump 114 that is configured to apply vacuum force to, or to blow cooling air on, a glass substrate during a forming process of the glass substrate. To illustrate, the air pump 114 may be connected to one or more of the rods 120, such as to all of the rods 120. Each rod 120 that is connected to the air pump 114 may be configured to apply vacuum force to, or to blow cool air against, the glass substrate 160 via the first end 122 of the rod 120, through the pad 150. In this regard, at least one of the rods 120 may be configured to apply vacuum force to a glass substrate (e.g., the glass substrate 160) that is placed on the rods 120, or to provide cooling air to a glass substrate (e.g., the glass substrate 160) that is placed on the rods 120.

One or more rods 120 of the glass forming system 100 may be configured to provide heat, to provide cooling air, to apply vacuum force, or a combination thereof. The glass forming system 100 may be controlled to apply heat, air cooling, vacuum force, or a combination thereof to one or more localized areas of a glass substrate via one or more of the rods 120, or may be controlled to apply heat, air cooling, or vacuum simultaneously via all of the rods 120. Respective amounts of heat, air cooling, and/or vacuum force delivered by each of the rods 120 may be the same or different. One or both of the heat source 112 and the air pump 114 may be carried by the support 110.

The glass forming system 100 may include a controller 180 that is communicatively coupled to the actuators 140. The controller 180 may be configured to control positioning of the rods 120 individually relative to each other to reconfigure the engagement surface 156 of the pad 150 during a forming process of a glass substrate (e.g., the glass substrate 160). To illustrate, the controller 180 may be configured to send position indicating signals to one or more actuators 140 at predetermined times during a forming process of the glass substrate 160. The position indicating signals may control the one or more actuators 140 to translate one or more of the rods 120 along the transverse direction relative to the support 110. The controller 180 may further be communicatively coupled to one or both of the heat source 112 and the air pump 114. The controller 180 may control the application of heat, air cooling, and vacuum force to one or more portions of the glass substrate 160. To illustrate, the controller 180 may be configured to send control signals to one or both of the heat source 112 and the air pump 114 at predetermined times during a forming process of the glass substrate 160.

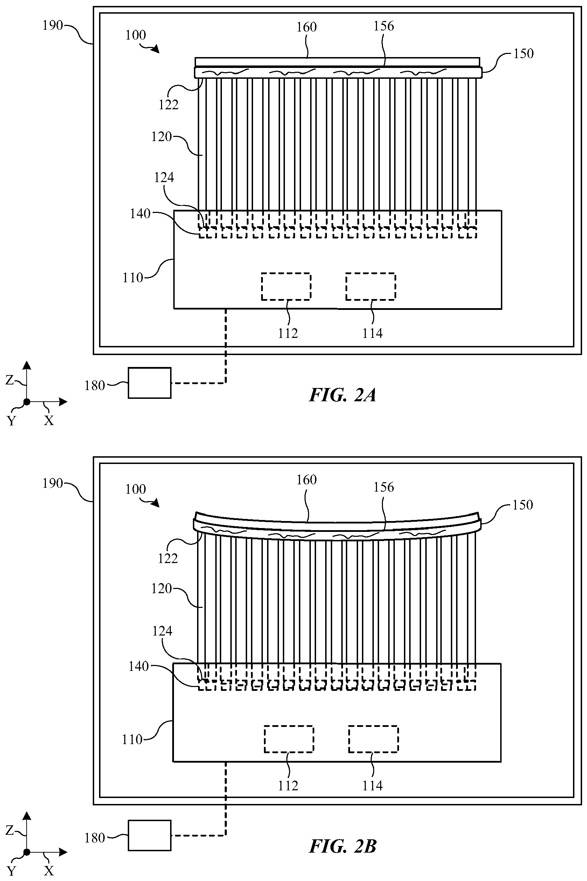

FIGs. 2A-2C are side views of a glass forming system in accordance with the instant disclosure, during respective portions of an example process that is performed by the glass forming system to form a glass substrate. For the purposes of illustration, the glass forming system 100 is illustrated installed in a glass bending furnace 190, with the glass substrate 160 placed on the pad 150 to undergo a forming process.

FIG. 2A depicts the positioning of the rods 120 of the glass forming system 100 at the outset of the forming process. The illustrated glass forming process comprises a gravity bending process of forming the glass substrate 160. More specifically, the glass substrate 160 is placed onto the glass forming system 100 in the glass bending furnace 190 and heated. As the glass substrate 160 is heated, it bends under its own weight and conforms with the engagement surface 156 of the pad 150 as one or more of the rods 120 are translated along the transverse direction, such that the geometry of the engagement surface is imparted to the glass substrate 160. In this regard, the rods 120 and the pad 150 of the glass forming system 100 may function as a dynamic, reconfigurable mold relative to the glass substrate 160 during the forming process.

In FIG. 2B, a number of the actuators 140 are depicted having translated one or more of the rods 120 downward along the transverse direction relative to the support 110. Downward movement of one or more of the rods 120, and in turn the first ends 122 of those rods 120, may translate corresponding portions of the pad 150 downward in kind, such that the engagement surface 156 of the pad 150 is reconfigured. As the engagement surface 156 is reconfigured, the glass substrate 160 may bend to conform to the engagement surface 156, such that a curvature is imparted to the glass substrate 160.

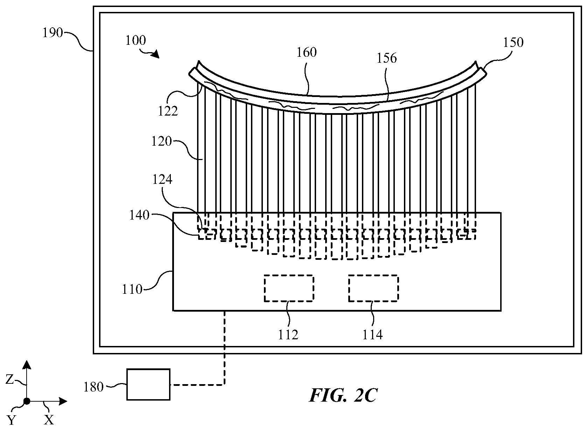

In FIG. 2C, a number of the actuators 140 are depicted having translated one or more of the rods 120 further downward along the transverse direction relative to the support 110, such that the engagement surface 156 of the pad 150 is further reconfigured, and such that the curvature imparted to the glass substrate 160 becomes more pronounced. One or both of the heat source 112 and the air pump 114 may function to apply heat and vacuum, respectively, via one or more of the rods 120, to one or more portions of the glass substrate 160 during one or more portions of the glass forming process.

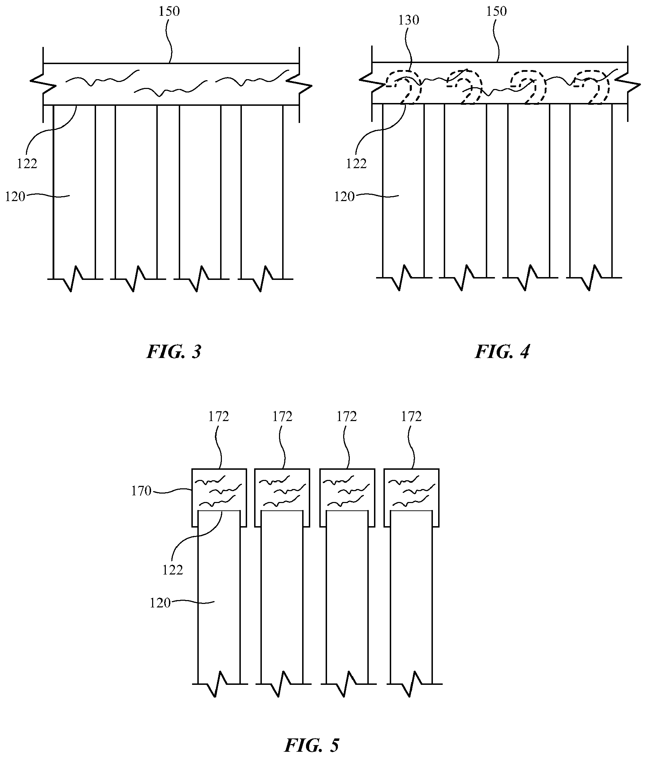

FIGs. 3 and 4 depict examples of how, in accordance with the instant disclosure, the rods of a glass forming system may be attached to the pad. For the purposes of illustration, a portion of the rods 120 and the pad 150 of the glass forming system 100 is illustrated.

FIG. 3 illustrates an example of fixedly coupling the rods 120 to the pad 150, such that the rods 120 are at least semi permanently attached to the pad 150. To illustrate, the first end 122 of each rod 120 may be welded to the pad 150. In this regard, each of the rods 120 may be fixedly attached to the pad 150.

FIG. 4 illustrates an example of removably attaching the rods 120 to the pad 150, such that each of the rods 120 may be separately detached from the pad 150. The first end 122 of each rod 120 may be configured to allow removable attachment to the pad 150. To illustrate, the first end 122 of each rod 120 may comprise a mechanical feature, such as a hook 130 for example, which may be secured in place within a corresponding portion of the pad 150. In this regard, each of the rods 120 may be removably attached to the pad 150.

FIG. 5 is a side view of a portion of the glass forming system 100, in an accordance with an alternative configuration in which the pad 150 is omitted. In place of the pad 150, each rod 120 is fitted with an engagement pad 170. More specifically, the first end 122 of each rod 120 has an engagement pad 170 attached thereto. As shown, each pad 170 has an upper surface 172. The upper surfaces 172 of the engagement pads 170 together function as an engagement surface upon which a glass substrate (e.g., the glass substrate 160) is placed. In accordance with the illustrated configuration, the glass forming system 100 includes the engagement pads 170, each engagement pad 170 coupled to the first end 122 of one of the rods 120. In accordance with such an alternative configuration, the engagement pads 170 may collectively be referred to as the pad of the glass forming system 100. In this regard, the pad of such an alternative configuration of the glass forming system 100 may comprise two or more engagement pads 170, such as an array of engagement pads 170.

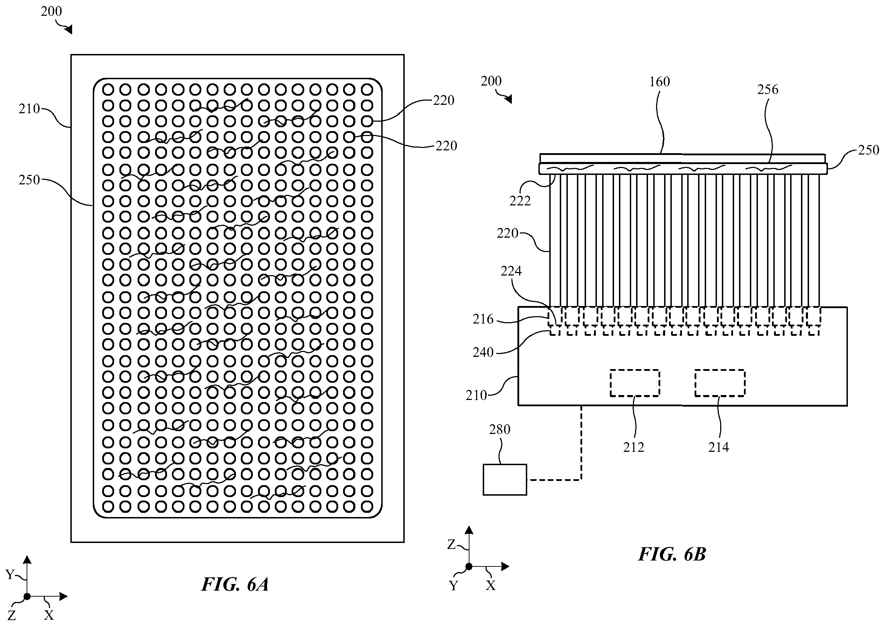

FIG. 6A is a top view of another glass forming system 200 in accordance with the instant disclosure. FIG. 6B is a side view of the glass forming system 200. The illustrated glass forming system 200 includes a support 210 that is configured to be installed in a glass bending furnace, rods 220, actuators 240, a pad 250 that is carried by the rods 220, and a controller 280. The glass forming system 200 may be constructed similarly to the glass forming system 100, with exceptions as described herein. For the sake of brevity, features of the glass forming system 200 that are equivalent to those of the glass forming system 100 are referred to with reference numbers incremented by 100.

The rods 220 of the glass forming system 200 may be spaced from one another and arranged relative to one another based on a geometry of a glass substrate (e.g., the glass substrate 160) that is to be formed by the glass forming system 200. As shown, the rods 220 may be located adjacent to one another and spaced from each other and arranged in an array upon which the glass substrate 160 is placed. Furthermore, the rods 220 may be oriented parallel to one another along the transverse direction.

As shown, the rods 220 may be arranged within the array into rows and columns that extend along and are parallel to the lateral direction and the longitudinal direction, respectively. The pad 250 of the glass bending system may be carried by the rods 220 and may be configured to define an engagement surface 256 on the array upon which the glass substrate 160 may be placed. The pad 250 may be constructed similarly to the pad 150 of the glass forming system 100, such that the engagement surface 256 may be reconfigurable based on movement of the rods 220, and in particular by translation of the first ends 222 of the rods 220 along the transverse direction relative to the support 210.

The glass forming system 200 may include one or both of a heat source 212 and an air pump 214. The heat source 212 and the air pump 214 may function to apply heat, air cooling, vacuum force, or a combination thereof, via one or more of the rods 220, to one or more portions of the glass substrate 160 during one or more portions of a glass forming process. In this regard, at least one of the rods 220 of the array may be configured to apply vacuum force to a glass substrate that is placed on the array, may be configured to apply heat to a glass substrate that is placed on the array, may be configured to apply air cooling to a glass substrate that is placed on the array, or a combination thereof.

The glass forming system 200 may be provided as a modular glass forming system. For example, the support 210 may be configured to allow customization of the array of rods 220 via the removal or addition of one or more rods 220. To illustrate, the support 210 may be provided with a number of receptacles 216. The receptacles 216 may be arranged in an array spaced apart from each other. As shown, the receptacles 216 are arranged in a rectangular array that corresponds to the arrangement of the rods 220.

Each receptacle 216 may be configured to removably receive a rod 220, such that the rod 220 may be disposed into the receptacle 216 and operably coupled to a corresponding one of the actuators 240. Each actuator 240 may be configured to be attachable to the second end 224 of a rod 220 via a corresponding one of the receptacles 216. In this regard, the second end 224 of each rod 220 may be referred to as an attachment end of the rod 220. Further in accordance with the glass forming system 200 being provided as a modular glass forming system, the first end 222 of each rod 220 may be configured to be removably attachable to the pad 250, for example as described elsewhere herein with reference to the glass forming system 100. The first end 222 of each rod 220 may be referred to as an engagement end. The rods 220 of the glass forming system 200 may be referred to as glass forming tools.

The glass forming system 200 may include one or more rods 220 that are configured as alternative glass forming tools. To illustrate, the engagement ends (i.e., the first ends 222) of one or more rods 220 may be configured with alternative geometries to engage directly with a glass substrate. In an example, in lieu of being configured for removable attachment to the pad 250, the engagement end of such a rod 220 may be configured with a particular geometry, such as a curved or rounded geometry, a faceted geometry, one or more angled surfaces, or the like. In another example, the engagement ends of two or more rods 220 may be configured to cooperatively support a straight bar, a curved bar, a ring, or the like. In this regard, each receptacle 216 may be configured to removably receive one or more rods 220 of a glass forming tool. The actuators 240 may be configured to move such glass forming tools in a transverse direction relative to the support 210. The engagement surface 256 of the pad 250 may be reconfigurable based on movement of one or more of the glass forming tools.

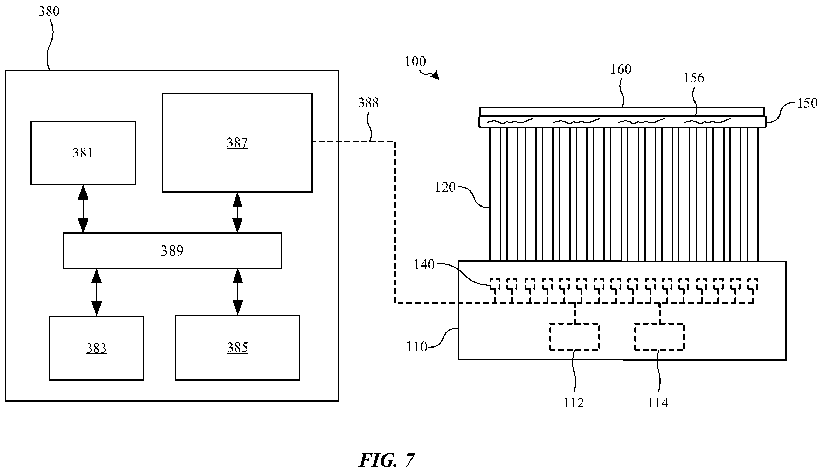

FIG. 7 is a block diagram of a controller 380 that may be configured to control components of a glass forming system in accordance with the instant disclosure. The controller 380 may be implemented as the controller 180 of the glass forming system 100 or as the controller 280 of the glass forming system 200. For the purposes of illustration, the controller 380 is depicted as communicatively coupled to the glass forming system 100, such that the controller 380 is implemented as the controller 180.

As shown, the controller 380 includes a processor 381, a memory 383, a storage device 385, and a communications component 387. These components may be interconnected by hardware, such as a bus 389 that allows communication between the components. The processor 381 may be a central processing unit that is configured to execute computer program instructions and to perform operations described by the computer program instructions. The memory 383 may be a volatile, high-speed, short-term information storage device such as a random-access memory module. The storage device 385 may be a nonvolatile information storage device such as a hard drive, solid-state drive, or read-only memory module. The communications component 387 may be configured for unidirectional or bidirectional wireless and/or wired communications with other components of the glass forming system 100, such as the actuators 140, the heat source 112, and the air pump 114, for example via direct communication connections 388.

As shown, the controller 380 is provided as a discrete, general-purpose component that may be configured to communicate with one or more of the actuators 140, the heat source 112, and the air pump 114 via the communications component 387. It should be appreciated that the components of the controller 380 are not limited to the functionalities described herein. It should further be appreciated that the controller 380 is not limited to the components illustrated herein.

In an example of operation, the controller 380 may control positioning of the rods 120 individually relative to each other to reconfigure the engagement surface 156 of the pad 150 during a forming process of a glass substrate (e.g., the glass substrate 160), may control the application of heat via the heat source 112 to one or more portions of the glass substrate 160, may control the application of air cooling or vacuum force via the air pump 114 to one or more portions of the glass substrate 160, or any combination thereof. Preferably, the controller 380 may transmit position indicating signals and control signals to corresponding components of the glass forming system 100 at specified intervals, in accordance with a predetermined forming process of the glass substrate 160.

It should be appreciated that the glass forming systems illustrated and described herein are not limited to their respective number or arrangement of rods. For example, the rods 120 of the glass forming system 100 are not limited to being arranged in the first boundary 126 and the second boundary 128 as shown. The rods 120 may alternatively be arranged in any other suitable geometry or geometries. Additionally, the glass forming system 100 may be provided with more or fewer rods 120. In another example, the rods 220 of the glass forming system 200 are not limited to being arranged in the illustrated rectangular array. The rods 220 may alternatively be arranged in any other suitable geometry or geometries. Additionally, the glass forming system 200 may be provided with more or fewer rods 220.

It should further be appreciated that the glass forming systems illustrated and described herein are not limited to their respective spacing between rods. For example, the spacing between rods 120 of the glass forming system 100 may alternatively be wider or narrower than the illustrated spacing. Furthermore, the spacing between rods 120 need not be uniform. Stated differently, the glass forming system 100 may be alternatively configured such that spacing between the rods 120 is non-uniform in one or more portions of the first boundary 126 and/or the second boundary 128. In another example, the spacing between receptacles 216 of the glass forming system 200 may alternatively be wider or narrower than the illustrated spacing.

As described above, one aspect of the present technology is the gathering and use of data available from various sources for use during operation of a vehicle that includes the one or more glass panels formed using the glass forming system 100. As an example, such data may identify the user and include user-specific settings or preferences. The present disclosure contemplates that in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, a user profile may be established that stores user-preference-related information that allows operation of a vehicle according to user preferences. Accordingly, use of such personal information data enhances the user's experience.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of storing a user profile for operating a vehicle, the present technology can be configured to allow users to select to "opt in" or "opt out" of participation in the collection of personal information data during registration for services or anytime thereafter. In another example, users can select not to provide data regarding usage of specific applications. In yet another example, users can select to limit the length of time that application usage data is maintained or entirely prohibit the development of an application usage profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data at a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, user preference information may be determined each time the vehicle is used, such as by prompting a user for needed information, and without subsequently storing the information or associating with the particular user.

Exemplary embodiments of the present disclosure are set out in the following items:
1. A glass forming system comprising:
   a support that is configured to be installed in a glass bending furnace;
   rods that are located adjacent to one another and spaced from each other to define a perimeter that encloses an open space;
   actuators that are attached to the support, each of the actuators configured to move a corresponding one of the rods; and
   a pad that is carried by the rods and defines an engagement surface upon which a glass substrate is placed,
   wherein a geometry of the engagement surface is reconfigurable based on movement of one or more of the rods.
2. The glass forming system of item 1, wherein the rods are arranged in a first boundary and a second boundary, the second boundary having a length that is shorter than that of the first boundary.
3. The glass forming system of item 2, wherein the second boundary is nested within the first boundary.
4. The glass forming system of any of items 1-3, wherein each of the rods is fixedly attached to the pad.
5. The glass forming system of any of items 1-4, wherein each of the rods is removably attached to the pad.
6. The glass forming system of any of items 1-5, wherein each of the actuators is configured for manual translation of a corresponding one of the rods along a transverse direction relative to the support.
7. The glass forming system of any of items 1-6, wherein the actuators comprise linear actuators, and
   wherein each of the linear actuators is configured to translate a corresponding one of the rods along a transverse direction relative to the support.
8. The glass forming system of item 7, wherein the linear actuators are configured to control positioning of the rods individually relative to each other to reconfigure the engagement surface of the pad during a forming process of the glass substrate.
9. The glass forming system of any of items 1-8, wherein at least one of the rods is configured to apply vacuum force to the glass substrate.
10. The glass forming system of any of items 1-9, wherein at least one of the rods is configured to apply heat to the glass substrate.
11. The glass forming system of any of items 1-10, wherein the pad comprises an array of engagement pads, each engagement pad coupled to an end of one of the rods.
12. The glass forming system of any of items 1-11, wherein the rods are oriented parallel to one another along the transverse direction.
13. The glass forming system of any of items 1-12, wherein the support comprises:
   a first receptacle that is configured to removably receive a first rod of the rods; and
   a second receptacle that is configured to removably receive a second rod of the rods.
14. The glass forming system of item 13, wherein the support is configured to provide vacuum force to the glass substrate through at least one of the first rod or the second rod.
15. The glass forming system of any of items 13-14, wherein the support is configured to provide heat to the glass substrate through at least one of the first rod or the second rod.

## Claims

1. A glass forming system comprising:
a support that is configured to be installed in a glass bending furnace;
rods that are located adjacent to one another and spaced from each other to define a perimeter that encloses an open space;
actuators that are attached to the support, each of the actuators configured to move a corresponding one of the rods; and
a pad that is carried by the rods and defines an engagement surface upon which a glass substrate is placed,
wherein a geometry of the engagement surface is reconfigurable based on movement of one or more of the rods.

2. The glass forming system of claim 1, wherein the rods are arranged in a first boundary and a second boundary, the second boundary having a length that is shorter than that of the first boundary.

3. The glass forming system of claim 2, wherein the second boundary is nested within the first boundary.

4. The glass forming system of any of claims 1-3, wherein each of the rods is fixedly attached to the pad.

5. The glass forming system of any of claims 1-4, wherein each of the rods is removably attached to the pad.

6. The glass forming system of any of claims 1-5, wherein each of the actuators is configured for manual translation of a corresponding one of the rods along a transverse direction relative to the support.

7. The glass forming system of any of claims 1-6, wherein the actuators comprise linear actuators, and
wherein each of the linear actuators is configured to translate a corresponding one of the rods along a transverse direction relative to the support.

8. The glass forming system of claim 7, wherein the linear actuators are configured to control positioning of the rods individually relative to each other to reconfigure the engagement surface of the pad during a forming process of the glass substrate.

9. The glass forming system of any of claims 1-8, wherein at least one of the rods is configured to apply vacuum force to the glass substrate.

10. The glass forming system of any of claims 1-9, wherein at least one of the rods is configured to apply heat to the glass substrate.

11. The glass forming system of any of claims 1-10, wherein the pad comprises an array of engagement pads, each engagement pad coupled to an end of one of the rods.

12. The glass forming system of any of claims 1-11, wherein the rods are oriented parallel to one another along the transverse direction.

13. The glass forming system of any of claims 1-12, wherein the support comprises:
a first receptacle that is configured to removably receive a first rod of the rods; and
a second receptacle that is configured to removably receive a second rod of the rods.

14. The glass forming system of claim 13, wherein the support is configured to provide vacuum force to the glass substrate through at least one of the first rod or the second rod.

15. The glass forming system of any of claims 13-14, wherein the support is configured to provide heat to the glass substrate through at least one of the first rod or the second rod.
